(19) Europäisches Patentamt / European Patent Office / Office européen des brevets

(11) **EP 2 265 932 B1**

(12) **EUROPEAN PATENT SPECIFICATION**

(45) Date of publication and mention of the grant of the patent:
**22.05.2013 Bulletin 2013/21**

(51) Int Cl.:
**G02B 21/16** (2006.01)  **H04N 13/02** (2006.01)
**G02B 21/36** (2006.01)

(21) Application number: **09755379.6**

(22) Date of filing: **30.03.2009**

(86) International application number:
**PCT/US2009/038799**

(87) International publication number:
**WO 2009/146016 (03.12.2009 Gazette 2009/49)**

(54) **3D BIPLANE MICROSCOPY**

BIPLANES 3D-MIKROSKOP

MICROSCOPIES BIPLANS EN 3D

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **01.04.2008 US 60730**

(43) Date of publication of application:
**29.12.2010 Bulletin 2010/52**

(73) Proprietors:
• **The Jackson Laboratory**
  **Bar Harbor, ME 04609 (US)**
• **University of Maine**
  **Orono, Maine 04469-5717 (US)**

(72) Inventors:
• **BEWERSDORF, Joerg**
  **Branford**
  **Connecticut 06405 (US)**
• **JUETTE, Manuel, F.**
  **51503 Rosrath (DE)**
• **GOULD, Travis**
  **Old Town**
  **ME 04468 (US)**
• **HESS, Sam, T.**
  **Stillwater**
  **ME 04489 (US)**

(74) Representative: **Grünecker, Kinkeldey, Stockmair & Schwanhäusser**
  **Leopoldstrasse 4**
  **80802 München (DE)**

(56) References cited:
WO-A2-2006/127692    US-A1- 2002 064 789
US-A1- 2002 076 200    US-A1- 2002 101 593
US-B2- 6 804 385

• **TOPRAK E ET AL: "Three-Dimensional Particle Tracking via Bifocal Imaging", NANO LETTERS, ACS, US, vol. 7, no. 7, 11 July 2007 (2007-07-11), pages 2043-2045, XP002612729, ISSN: 1530-6984, DOI: 10.1021/NL0709120 [retrieved on 2007-06-21]**
• **HUANG B ET AL: "Three-Dimensional Super-Resolution Imaging by Stochastic Optical Reconstruction Microscopy", SCIENCE, AMERICAN ASSOCIATION FOR THE ADVANCEMENT OF SCIENCE, WASHINGTON, DC; US, vol. 319, 8 February 2008 (2008-02-08), pages 810-813, XP002523347, ISSN: 0036-8075, DOI: 10.1126/SCIENCE.1153529 [retrieved on 2008-01-03]**
• **HESS S T ET AL: "Ultra-high resolution imaging by fluorescence photoactivation localization microscopy", BIOPHYSICAL JOURNAL, BIOPHYSICAL SOCIETY, US, vol. 91, no. 11, 1 December 2006 (2006-12-01), pages 4258-4272, XP008082813, ISSN: 0006-3495, DOI: 10.1529/BIOPHYSJ.106.091116**

**Description**

## FIELD OF THE INVENTION

The present invention relates generally to microscopic imaging and, more specifically, to three-dimensional ("3D") sub-100 nanometer resolution by biplane microscope imaging.

## BACKGROUND OF THE INVENTION

Until about a decade ago, resolution in far-field light microscopy was thought to be limited to -200-250 nanometers in the focal plane, concealing details of sub-cellular structures and constraining its biological applications. Breaking this diffraction barrier by the seminal concept of stimulated emission depletion ("STED") microscopy has made it possible to image biological systems at the nanoscale with light. Additional details are provided in an article titled "Far-Field Optical Nanoscopy by Stefan W. Hell (316 Science, 1153-1158, May 25, 2007). STED microscopy and other members of reversible saturable optical fluorescence transitions ("RESOLFT") family achieve a resolution >10-fold beyond the diffraction barrier by engineering the microscope's point-spread function ("PSF"), also referred to as a "reference data set," through optically saturable transitions of the (fluorescent) probe molecules.

Lately, an emerging group of localization-based techniques has obtained similar resolution in the lateral plane. This group includes fluorescence photoactivation localization microscopy ("FPALM"), photoactivation localization microscopy ("PALM"), stochastic optical reconstruction microscopy ("STORM"), and PALM with independently running acquisition ("PALMIRA"). FPALM is described in more detail in an article titled "UltraHigh Resolution Imaging by Fluorescence Photoactivation Localization Microscopy" by Samuel T. Hess et al. (91 Biophysical Journal, 4258-4272, December 2006). PALM is described in more detail in an article titled "Imaging Intracellular Fluorescent Proteins at Nanometer Resolution" by Eric Betzig et al. (313 Science, 1642-1645, September 15, 2006). STORM is described in more detail in an article titled "Sub-Diffraction-Limit Imaging by Stochastic Optical Reconstruction Microscopy" by Michael J. Rust et al. (Nature Methods / Advance Online Publication, August 9, 2006). PALMIRA is described in more detail in an article titled "Resolution of $\lambda/10$ in Fluorescence Microscopy Using Fast Single Molecule Photo-Switching" by H. Bock et al. (88 Applied Physics A, 223-226, June 1, 2007), and an article titled "Photochromic Rhodamines Provide Nanoscopy With Optical Sectioning" by J. Folling et al. (Angew. Chem. Int. Ed., 46, 6266-6270, 2007). As referred to in the current application, the term photo-sensitive refers to both photo-activatable (e.g., switching probes between an on state and an off state) and photo-switching (e.g.., switching between a first color and a second color).

While utilizing similar optical switching mechanisms, this latter group of microscopes circumvents the diffraction limit by basing resolution improvement on the precise localization of spatially well-separated fluorescent molecules, a method previously used to track, for example, conventionally labeled myosin V molecules with 1.5 nanometers localization accuracy. This method is described in more detail in an article titled "Myosin V Walks Hand-Over-Hand: Single Fluorophore Imaging With 1.5-nanometers Localization" by Ahmet Yildiz et al. (300 Science, 2061-2065, June 27, 2003).

To resolve complex nanoscale structures by localization-based methods, the sample is labeled with photo-sensitive probes, such as photo-activatable ("PA") fluorescent probes (e.g., PA proteins or caged organic dyes). Activation of only a sparse subset of molecules at a time allows their separate localization. By repeated bleaching or deactivation of the active molecules in concert with activation of other inactive probe molecules, a large fraction of the whole probe ensemble can be localized over time. The final sub-diffraction image of the labeled structure is generated by plotting the positions of some or all localized molecules.

Based on the rapid development in both RESOLFT and localization-based techniques, the impact of super-resolution far-field fluorescence microscopy on the biological sciences is expected to increase significantly. Within 2007 alone subdiffraction multi-color imaging has been reported for the first time for STED microscopy, PALMIRA, STORM, and FPALM has successfully been demonstrated in live cells. Some of these reports are included in an article titled "Two-Color Far-Field Fluorescence Nanoscopy" by Gerald Donnert et al. (Biophysical Journal, L67-L69, February 6, 2007), in an article by M. Bates, B. Huang, G.T. Dempsey, and X. Zhuang (Science 317, 1749-1753, 2007), and in an article titled "Dynamic Clustered Distribution of Hemagglutinin Resolved at 40 nanometers in Living Cell Membranes Discriminates Between Raft Theories" by Samuel T. Hess et al. ( Proc. Natl. Acad. Sci. USA 104, 17370-17375, October 30, 2007).

However, the slow progress in 3D super-resolution imaging has limited the application of these techniques to two-dimensional ("2D") imaging. The best 3D resolution until recently had been 100 nanometers axially at conventional lateral resolution. Achieved by the combination of two objective lens apertures in 4Pi microscopy, it has been applied for more than a decade. This is described in more detail in an article titled "H2AX Chromatin Structures and Their Response to DNA Damage Revealed by 4Pi Microscopy" by Joerg Bewersdorf et al. (Proc. Natl. Acad. Sci. USA 103, 18137-18142, November 28, 2006). Only lately first 3D STED microscopy images have been published exceeding this resolution moderately with 139 nanometer lateral and 170 nanometer axial resolution. These images are presented in more detail in an article by K. I. Willig, B. Harke, R. Medda, and S. W. Hell (Nat. Methods 4, 915-918, 2007). While this represents a ~10-fold smaller resolvable volume than provided by conventional microscopy, it is still at least 10-fold larger than a large number of sub-cellular components, for example synaptic vesicles. Recently, an article (Huang et al., Science 2008) has reported first 3D STORM of thin optical sections (<600 nanometers) with sub-100 nanometer 3D resolution under reducing (low oxygen) conditions.

Moreover, current understanding of fundamental biological processes on the nanoscale (e.g., neural network formation, chromatin organization) is limited because these processes cannot be visualized at the necessary sub-millisecond time resolution. Current biological research at the sub-cellular level is constrained by the limits of spatial and temporal resolution in fluorescence microscopy. The diameter of most organelles is below the diffraction limit of light, limiting spatial resolution and concealing sub-structure. Recent developments (e.g., STED, FPALM, STORM, etc.) have dramatically enhanced the spatial resolution and even overcome the traditional diffraction barrier. However, comparable improvements in temporal resolution are still needed.

Particle-tracking techniques can localize small objects (typically < diffraction limit) in live cells with sub-diffraction accuracy and track their movement over time. But conventional particle-tracking fluorescence microscopy cannot temporally resolve interactions of organelles, molecular machines, or even single proteins, which typically happen within milliseconds.

The spatial localization accuracy of single particles in a fluorescence microscope is approximately proportional to $d / \sqrt{N}$ (d = spatial resolution; N = total number of detected fluorescence photons from the particle) in the absence of background and effects due to finite pixel size. For longer acquisition times more signal can be accumulated, hence increased temporal resolution requires a trade-off of decreased spatial localization accuracy. For bright organelles containing a few hundred fluorescent molecules, (or future fluorescent molecules with increased brightness), sufficient signal can be accumulated quickly. However, especially for 3D localization where data acquisition is far more complicated than in 2D, technical constraints arising from axial scanning and/or camera readout times limit the recording speed, and therefore, the temporal resolution.

For example, a particular 3D particle-tracking technique can track particles only with 32 milliseconds time resolution. This technique scans a 2-photon excitation focus in a 3D orbit around the fluorescent particle and determines its 3D position by analyzing the temporal fluorescence fluctuations. The temporal resolution is ultimately limited by the frequency with which the focus can revolve in 3D around the particle. This technique is described in more detail in an article titled "3-D Particle Tracking In A Two-Photon Microscope: Application To The Study Of Molecular Dynamics IN Cells" by V. Levi, Q. Ruan, and E. Gratton (Biophys. J., 2005, 88(4): pp. 2919-28).

In another example, another current 3D particle-tracking technique combines traditional particle-tracking with widefield "bifocal detection" images. Particles are simultaneously detected in one plane close to the focal plane of the particle and a second plane 1 micrometer out of focus. The lateral and axial coordinates are derived from the 2 images. In accordance with this technique, the temporal resolution is limited to the 2-50 milliseconds range, and the localization accuracy is limited to the 2-5 nanometer range. Additional details are described in an article titled "Three-Dimensional Particle Tracking Via Bifocal Imaging" by E Toprak et al. (Nano Lett., 2007, 7(7): pp. 2043-45). As such, advances in temporal resolution to sub-millisecond levels have been limited only to 2D imaging.

In general, determining the 3D position of a particle by any of the methods mentioned above requires fitting a model function to the respective experimental data. The particle position (and also, typically, the particle brightness and background value) can be deduced from the parameters that fit the experimental data best, according to a chosen figure of merit. In most cases, an analytical function is used to reasonably model the characteristics that dominantly describe the 3D particle position, e.g., the diameter of the defocused image or the particle ellipticity in the case of astigmatism. The model function is calibrated with imaged particles located at known positions to achieve mapping of the determined fit parameters to real spatial positions.

This indirect method, especially of acquiring the z-position from abstract fit parameters such as ellipticity or ring diameter, is problematic, however, because it is prone to artifacts in the analysis process. Experimental deviations from the theoretical descriptions by the model function can lead to divergence between real and measured particle positions. Additionally, every model function is limited to a certain optical setup and weighs the information content of the raw data differently. This prevents a direct comparison of different optical setups.

Thus, there is a need for a microscopy system that can provide 3D imaging with resolution below 100 nanometers in all three dimensions. Another need is directed to achieving particle-tracking in 3D with a temporal resolution below 1 millisecond for enabling visualization of dynamic sub-cellular processes. The present invention is directed to satisfying one or more of these needs and solving other problems.

## SUMMARY OF THE INVENTION

According to one embodiment, a microscopy system is configured for creating 3D images from individually localized probe molecules. The microscopy system includes a sample stage, an activation light source, a readout light source, a beam splitting device, at least one camera, and a controller. The activation light source activates probes of at least one probe subset of photo-sensitive luminescent probes, and the readout light source causes luminescence light from the activated probes. Optionally, the activation light source and the readout light source is the same light source. The beam splitting device splits the luminescence light into at least two paths to create at least two detection planes that correspond to the same or different number of object planes of the sample. The camera detects simultaneously the at least two detection planes, the number of object planes being represented in the camera by the same number of recorded regions of interest. The controller is programmable to combine a signal from the regions of interest into a 3D data set.

According to another embodiment, a method for creating 3D images from individually localized probe molecules includes mounting a sample on a sample stage, the sample having a plurality of photo-sensitive luminescent probes. In response to illuminating the sample with an activation light, probes of at least one probe subset of the plurality of photo-sensitive luminescent probes are activated. In response to illuminating the sample with a readout light, luminescence light from the activated probes is caused. The luminescence lights is split into at least two paths to create at least two detection planes, the at least two detection planes corresponding to the same or different object planes in the sample. At least two detection planes are detected via a camera. The object planes are recorded in corresponding recorded regions of interest in the camera. A signal from the regions of interest is combined into a 3D data stack.

According to yet another embodiment, a microscopy system is configured for tracking microscopic particles in 3D. The system includes a sample, a sample stage, at least one light source, a beam-steering device, a beam splitting device, at least one camera, and a controller. The sample, which includes luminescence particles, is mounted to the sample stage. The light source is configured to illuminate an area of the sample to cause luminescence light, primarily, from one tracked particle of the luminescence particles. The beam-steering device is configured to selectively move a light beam to illuminate different areas of the sample such that the luminescence light is detected. The beam splitting device, which is located in a detection light path, splits the luminescence light into at least two paths to create at least two detection planes that correspond to different object planes in the sample. The camera is positioned to detect simultaneously the at least two detection planes, the number of object planes being represented in the camera by the same number of recorded regions of interest. The controller is programmable to combine a signal from the recorded regions of interest, determine a 3D trajectory of the particle at each time point of a recorded data sequence, and move the beam-steering device to illuminate the different areas of the sample in accordance with corresponding positions of the one tracked particle.

According to yet another embodiment, a method for tracking microscopic particles in 3D includes mounting a sample on a sample stage, the sample including luminescent particles. A small area of the sample is illuminated to cause luminescence light from primarily one particle of the luminescent particles. The light beam is selectively moved to illuminate different areas of the sample to track movement of the one particle, the different areas including the small area of the sample and corresponding to respective positions of the one particle. The luminescence light is split into at least two paths to create at least two detection planes that correspond to the same or different number of object planes in the sample. The at least two detection planes are detected simultaneously. The number of object planes is represented in a camera by the same number of recorded regions of interest. Based on a combined signal from the recorded regions of interest, a 3D trajectory of the one particle is determined at each time point of a recorded data sequence.

According to yet another embodiment, a microscopy system is configured for creating 3D images from individually localized probe molecules. The microscopy system includes an activation light source, a readout light source, a beam splitting device, at least one camera, and a controller. The activation light source is configured to illuminate a sample with an activation light, the activation light source being configured to activate probes of at least one probe subset of the plurality of photo-sensitive luminescent probes. The readout light source is configured to illuminate the sample with a readout light, the readout light source being configured to cause luminescence light from the activated probes. The beam splitting device is located in a detection light path that splits the luminescence light into at least two paths, the beam splitting device creating at least two detection planes that correspond to the same or different number of object planes of the sample. The camera is positioned to detect simultaneously the at least two detection planes, the number of object planes being represented in the camera by the same number of recorded regions of interest. The controller is programmable to combine a signal from the regions of interest into a 3D data stack, to calculate a figure of merit as a measure of the difference between imaged pixel data and a reference data set $h_0(\xi_l)$ modifiable by at least one parameter, and to optimize the figure of merit by adjusting the at least one parameter.

Additional aspects of the invention will be apparent to those of ordinary skill in the art in view of the detailed description of various embodiments, which is made with reference to the drawings, a brief description of which is provided below.

## BRIEF DESCRIPTION OF THE DRAWINGS

FIG. 1 is a schematic view illustrating a biplane microscope setup for Fluorescence Photoactivation Localization Microscopy (FPALM), according to one embodiment.

FIG. 2 is a schematic view illustrating a biplane microscope setup, according to an alternative embodiment.

FIG. 3 is a schematic view illustrating a fluorescent particle image on a CCD chip.

FIG. 4A is a graph representing an axial resolution measured from an axial profile of caged fluorescein-labeled antibodies.

FIG. 4B is a representative image showing added-up projections of a data set in three different orientations for the axial resolution measured in FIG. 4A.

FIG. 5A is a representative image of a data set for beads labeled with caged fluorescein at an axial position of 300 nanometers.

FIG. 5B illustrates a representative image of a resulting data set for the beads of FIG. 5A at an axial position of 100 nanometers.

FIG. 5C illustrates a representative image of a resulting data set for the beads of FIG. 5A at an axial position of -100 nanometers.

FIG. 5D illustrates a representative image of a resulting data set for the beads of FIG. 5A at an axial position of -300 nanometers.

FIG. 5E illustrates a representative image of a resulting data set for the beads of FIG. 5A at an axial position of -500 nanometers.

FIG. 5F illustrates a volume-rendered representation of the data set illustrated in FIGs. 5A-5E.

FIG. 6 is a schematic view illustrating adjustment of a biplane microscope setup, according to an alternative embodiment.

FIG. 7A is a schematic view illustrating a fluorescent particle image on a CCD chip when the particle is in focus, in a first position.

FIG. 7B is a schematic view illustrating the fluorescent particle image of FIG. 7A when the particle is out of focus, in a second position.

FIG. 7C is a schematic view illustrating the fluorescent particle image of FIG. 7B when the particle is in focus, in a third position.

FIG. 8 is a diagrammatic representation of an exemplary embodiment of a photoactivation localization microscopy method.

FIG. 9 is a diagrammatic representation of an exemplary embodiment of a single particle tracking method.

FIG. 10 is a diagrammatic representation of an exemplary conventional embodiment of a non-iterative localization algorithm.

FIG. 11 is a diagrammatic representation of an exemplary conventional embodiment of an iterative localization algorithm.

FIG. 12 is a diagrammatic representation of an exemplary embodiment of a localization algorithm.

FIG. 13 is a diagrammatic representation of an exemplary embodiment of an algorithm for calculating a figure of merit.

FIG. 14 is a diagrammatic representation of an exemplary embodiment of a Fourier-Transform based Shift Algorithm.

## DETAILED DESCRIPTION

While this invention is susceptible of embodiment in many different forms, there is shown in the drawings and will herein be described in detail preferred embodiments of the invention with the understanding that the present disclosure is to be considered as an exemplification of the principles of the invention and is not intended to limit the broad aspect of the invention to the embodiments illustrated.

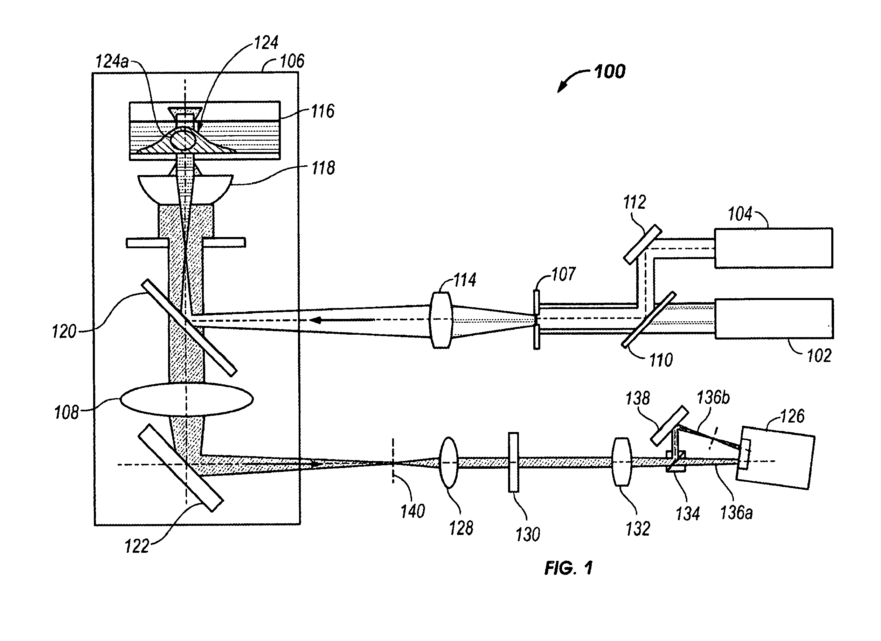

Referring to FIG. 1, a biplane ("BP") microscope system 100 allows 3D imaging at an unmatched resolution well below 100 nanometers in all three dimensions, resulting in at least a 100-fold smaller resolvable volume than obtainable by conventional 3D microscopy. The BP microscope system 100 is optionally a BP FPALM system, which is generally based on a conventional FPALM design. However, in contrast to conventional FPALM design, the BP microscope system 100 includes a modified detection path that allows the simultaneous detection from two focal planes. The simultaneous detection of two planes for localization-based super-resolution microscopy speeds up the imaging process by making axial scanning unnecessary, and more importantly, in contrast to scanning-based systems, eliminates localization artifacts caused by abrupt blinking and bleaching common to single molecules. The BP microscope system 100 can optionally be located on an air-damped optical table to minimize vibrations.

In addition to achieving 3D particle localization down to the nanometer range accuracy, the BP microscope system 100 can also achieve temporal resolution <1 milliseconds. As such, in addition to being a BP FPALM system, the BP microscope system 100 can also be a next-generation 3D particle-tracking microscope ("3D PTM") for providing unprecedented temporal and spatial resolution when tracking fluorescent particles in live cells in 3D. FPALM and particle-tracking are just some exemplary applications of the BP microscope system 100. To achieve unprecedented temporal resolution at least as short as 0.3 milliseconds, the BP microscope system 100 tracks one particle at a time (in contrast to conventional 2D and 3D tracking techniques that visualize the entire field). Additionally, the BP microscope system 100 can include a detection scheme without any moving parts that detects simultaneously two axially shifted detection planes.

In contrast to current PTM techniques, the BP microscope system 100 can include a focused laser beam for excitation combined with spatially limited detection. Background light is filtered out to avoid localization disturbances and to increase sensitivity in samples thicker than about 1 micrometer. This enables particle-tracking even in tissue sections. To follow a particular particle over several microns in 3D, the BP microscope system 100 can include, for example, high-speed piezo-mirrors and a fast piezo-driven sample stage. The combination of focused excitation and feedback-driven beam-tracking reduces the background and enhances the speed limit by approximately one order of magnitude. Optionally, a second (different) luminescence color can be detected to enable correlative studies of the movement of the tracked particle.

Illumination for readout and activation can be provided by a readout laser 102, operating typically at 496 nanometers, and an activation laser 104 (e.g., 50 mW, Crystalaser), operating typically at 405 nanometers. The readout laser 102 is optionally a water-cooled Argon laser (e.g., Innova 70, coherent Inc.) that can provide 458, 472, 488, 496, or 514 nanometers for readout illumination. Optionally, the wavelength of the readout laser 102 is selected to minimize activation of inactive probes of a plurality of photo-sensitive probes of a sample 124. Optionally yet, the readout laser 102 and the activation laser 104 can be the same source. For example, the readout laser 102 can perform both the readout functions and the activation functions, without requiring the use of the activation laser 104. According to one embodiment, at least one illuminated area of the sample 124 is a relatively small area, having, for example, a general diameter that is less than about three times an Airy disk diameter.

Both lasers 102, 104 are combined, via a first dichroic beam splitter 110, and coupled, via a second dichroic beam splitter 120, into a microscope stand 106 equipped with a 63x 1.2NA water immersion tube lens 108 after passing through a field aperture 107. Both lasers 102, 104 can be switched on and off by software-controlled electrical shutters (e.g., SH05, Thorlabs). Other components that may be included along the path between the lasers 102, 104 and the microscope stand 106 are a first mirror 112 and a first lens 114.

The microscope stand 106 can have a plurality of components, including a sample stage 116 and an objective 118. The sample 124, including for example a biological cell 124a is generally positioned on the sample stage 116. The sample stage 116 can be a mechanical stage or a three-axis piezo stage (e.g., P-733.3DD, Physik Instrumente). Other components, which are not shown, may include shutters in front of the lasers 102, 104 and further optics for folding the beam path.

Fluorescence is collected by the objective 118, passes through a second dichroic beam splitter 120 (which reflects the laser light) and is focused by the tube lens 108 via an optional second mirror 122 (e.g., a piezo-driven mirror) into an intermediate focal plane 140. The focal plane 140 is imaged by two lenses - a second lens 128 and a third lens 132 - onto a high-sensitivity EM-CCD camera 126 (e.g., DU897DCS-BV iXon, Andor Technology). Scattered laser light is attenuated by bandpass and Raman edge filters (e.g., Chroma and Semrock), such as filter 130.

The detection scheme can be achieved by moving the CCD camera 126 out of the standard image plane closer to the tube lens 108 and thereby shifting the corresponding focal plane ~350 nanometers deeper into the sample. A beam splitter cube 134 is placed into a focused light path 136a in front of the CCD camera 126. The beam splitter cube 134 redirects a reflected light path 136b via a third mirror 138 towards the CCD camera 126 to form a second image in a different region of the same CCD. Due to the longer optical path, this second image corresponds to a focal plane ~350 nanometers closer to the objective 118 than the original focal plane.

The BP microscope system 100, using a single camera, is straightforward to implement and avoids synchronization problems between separate cameras. The BP microscope system 100 features a reasonable field of view of -20 x 50 micrometers$^2$ (pixel size corresponding to ~100 nanometers in the sample 124; 512 x 512 pixels), sufficient to image large portions of a cell. The BP microscope system 100 is able to image 100 frames per second with a field of view of 10 to 20 micrometers in length and 2 x 2 binning. The use of the CCD camera 126, which features negligible readout noise due to its on-chip electron multiplication, avoids additional noise that would otherwise result from splitting the light up into two fields as required for BP detection. Combined with the fact that there is minimal loss of fluorescence detection efficiency, this exemplary BP microscope system 100 expands conventional FPALM to 3D imaging without significant drawbacks.

BP FPALM technology is compatible with live cell imaging and can be expanded to multicolor imaging (even realizable on the same CCD detector). BP FPALM can record 3D structures in a ~1 micrometer thick z-section without scanning. Larger volumes can be recorded by recording BP FPALM data at different sample positions. To minimize activation of out of focus PA molecules, BP FPALM can be combined with a 2-photon ("2P") laser scanner. 2P excitation-mediated activation is directed to diffraction-limited planes of -800 nanometers thickness, a thickness that is compatible with the axial detection range of BP FPALM. BP FPALM therefore has the potential of imaging specimens such as cell nuclei or tissue sections far exceeding 1 micrometer in thickness.

Moreover, combined with or without 2P excitation, BP FPALM can be readily implemented in practically every existing FPALM, PALM, PALMIRA or STORM instrument. BP FPALM therefore provides the means to investigate a large variety of biological 3D structures at resolution levels previously far out of reach.

Optionally, BP FPALM detected luminescence from activated probes is fluorescence or scattered light. In an alternative embodiment, the activation of activated probes is achieved via a non-linear process that limits the activation to a plane of diffraction-limited thickness.

For PSF measurement, according to one example, 100 nanometer diameter yellow-green fluorescent beads (Invitrogen, F-8803) can be attached to a poly-L-lysine coated cover slip. The sample can be mounted on a piezo stage and imaged in the BP FPALM setup with 496 nm excitation. Typically, 101 images at z-positions ranging from - 2.5 to +2.5 micrometers with 50 nanometers step size are recorded. The same bead is imaged 2 to 3 times to check for drift and to correct for bleaching. To reduce noise, the data set can be smoothed in Imspector with a Gaussian filter of sub-diffraction size. Additionally, the data set can be corrected for mono-exponential bleaching, cropped to appropriate size and to be centered and normalized to 1.

Use of two focal planes for z-position determination is generally sufficient for particle localization under the constraints that (1) a sparse distribution of particles is analyzed (no overlapping signal within the size of one PSF) and (2) the axial position of the particle is close to one of the detection planes or lies between them. For example, to evaluate the range and accuracy of z-localization, 40 nanometers diameter fluorescent beads (FluoSpheres, F8795, Invitrogen) were imaged on a cover slip over 1,000 frames. A piezo-driven sample stage was moved by one 100 nanometers z-step every 100 frames. Localization analysis of the BP images reproduced that z-movement very accurately with $\sigma \approx 6$ to 10 nanometers axial localization accuracy. The beads could be localized over a range of 800 nanometers exceeding the distance between the two detection planes (in this case 500 nanometers) by more than 50%.

In one example, the accumulation time per frame is typically 10 milliseconds. In this example, electron multiplying gain is set to 300, the readout is 2 x 2 binned, only the region occupied by two recorded regions of interest ("ROIs") is read out, and, typically, 5,000 to 50,000 frames are recorded.

Optionally, at least some of the ROIs are detected at different wavelengths by including suitable detection filters in the BP microscope system 100. In alternative embodiments, at least some of the ROIs are detected at different polarization directions by including suitable polarization optics in the BP microscopy system 100.

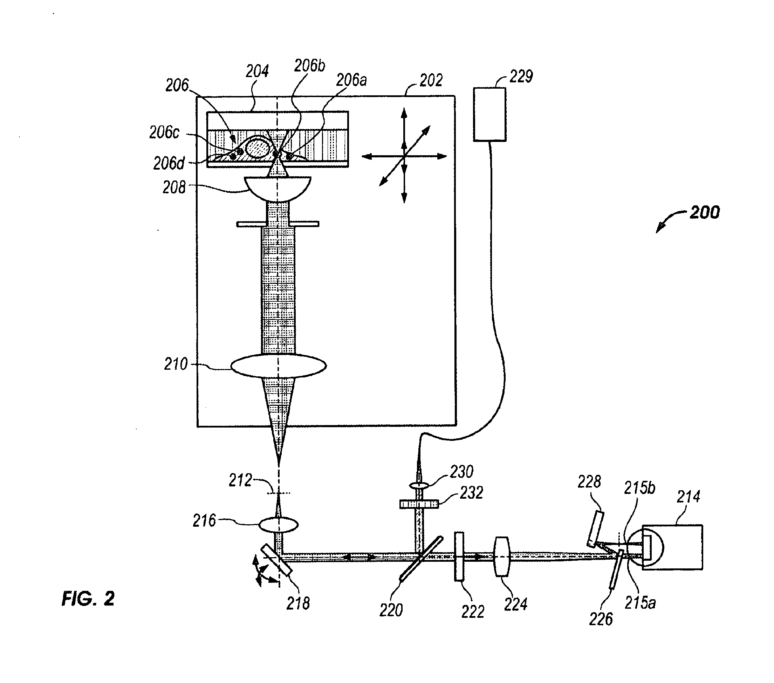

Referring to FIG. 2, a BP microscope system 200 is shown according to an alternative embodiment. The BP microscope system 200 includes a microscope stand 202 having a piezo-driven sample stage 204 on which a sample 206 is positioned. The sample 206 includes a plurality of fluorescent particles 206a-206d. The microscope stand 202 further includes an objective 208 and a first lens 210.

Additional components are positioned between a focal plane 212 and the CCD camera 214 along a fluorescence light path 215. Specifically, the components include a second lens 216, a beam-steering device 218 (*e.g.*, a piezo-driven mirror), a dichroic beam splitter 220, a bandpass filter 222, a third lens 224, a neutral 50:50 beam splitter 226, and a mirror 228. Optionally, the beam-steering device 218 can include generally a focusing optical element that moves illumination and detection focal planes axially to follow the tracked particle. In yet another example, the beam-steering device 218 can include a phase-modulating device that moves an illuminated area laterally and illumination and detection focal planes axially to follow the tracked particle. Optionally yet, more than one piezo-driven mirror 218 can be included in the BP microscope system 200.

A polarized laser beam from a laser 229 is coupled into the microscope stand 202 and focused into the sample 206 by the objective 208. A fourth lens 230 and a λ/4 plate 232 are positioned between the laser 229 and the dichroic beam splitter 220.

The focus can be positioned in the region of interest by moving the sample stage 204 and the beam-steering device 218. The fluorescence emerging from the focal region is collected by the objective 208 and is imaged onto the CCD camera 214 via the first lens 210, the second lens 216, and the third lens 224. The dichroic beam splitter 220 and the bandpass filter 222 filter out scattered excitation light and other background light.

The neutral 50:50 beam splitter 226 splits the fluorescence light into two beam paths, a transmitted beam 215a and a reflected beam 215b. The transmitted beam 215a images light emitted from a plane deeper in the sample onto one area of the CCD chip. The reflected beam 215b images light from a plane closer to the objective onto another well-separated area to avoid cross-talk.

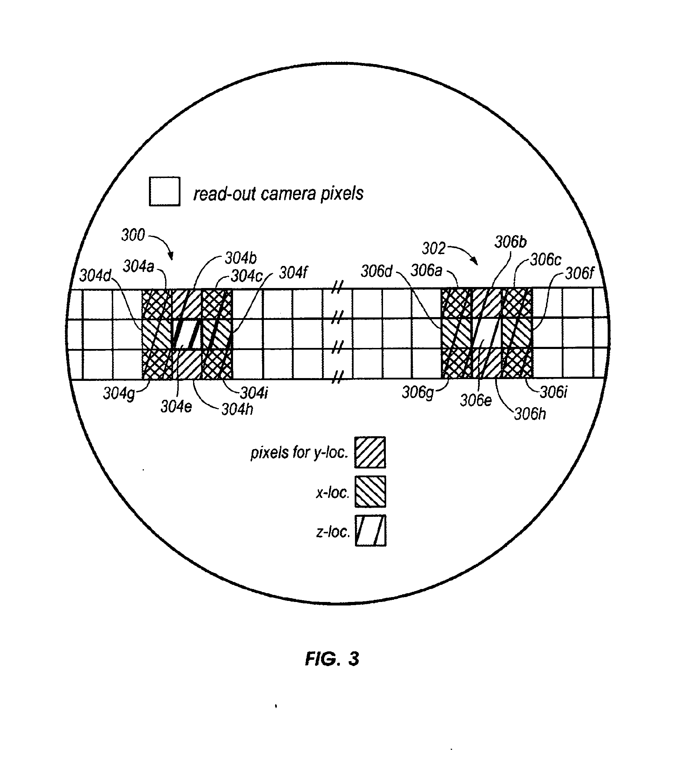

Referring to FIG. 3, two ROIs on the CCD chip represent two focal planes in the sample 206 (illustrated in FIG. 2), typically 700 nanometers apart, arranged like wings of a biplane. The two ROIs include a transmitted ROI 300 and a reflected ROI 302, each having nine pixels showing an image of the fluorescent particle 206b from the sample 206. The dashed areas 304a-304i, 306a-306i depict the pixels that are used for tracking the fluorescent particle 206b. Thus, the two 9-pixel-areas 304a-304i, 306a-306i represent in general the position of the particle 206b in 3D.

The fluorescent particle 206b, which is generally smaller than the laser focus and located in the focal region, is excited homogeneously and 3 (binned) lines (*i.e.*, the two 9-pixel-areas represented by dashed areas 304a-304i, 306a-306i) of the CCD chip arranged around the laser focus image are read out at every time point. Particles laterally shifted with respect to the laser focus center will appear shifted on the CCD chip. For the z direction, the two 9-pixel-areas 304a-304i, 306a-306i act in the same way as two confocal pinholes in different planes: if the particle 206b moves axially, the signal will increase in one of the 9-pixel-area and decrease in the other 9-pixel-area. An axial shift will be represented by a sharper intensity distribution in one of the two 9-pixel-areas depending on the direction of the shift.

The 3D position can be determined by subtracting different pixel values of the two 9-pixel-areas from each other. For the axial coordinate (z-axis), the sum of all pixels from one 9-pixel-area can be subtracted from the other 9-pixel-area. The fact that the lateral information is preserved in the 9-pixel-areas allows for lateral localization of the particle 306b at the same time. For the lateral x-axis (or y-axis) direction, the signal collected in the left columns 304a, 304d, 304g, 306a, 306d, 306g (or upper rows: 304a, 304b, 304c and 306a, 306b, 306c) of both 9-pixel-areas 300 and 302 can be subtracted from the one in the right columns 304c, 304f, 304i, 306c, 306f, 306i (or lower rows: 304g, 304h, 304i and 306g, 306h, 306i). Calculations show that the determined values are approximately proportional to the particle position offset of the center as long as the position stays in a range of +/- 250 nanometers axially and +/- 100 nanometers laterally. In a simple feedback loop, these values can be fed back to piezo controllers tilting piezo mirrors and moving the sample stage piezo to re-center the particle in the 9-pixel-areas after every measurement. Optionally, for larger movements up to about double the linear ranges, the position can be determined by taking the image shape and brightness into account in the data analysis to increase the tracking range.

According to an alternative embodiment, the pixels of the transmitted ROI 300 (on the left) show a brighter image than the pixels of the reflected ROI 302 (on the right). For example, the top-right dashed areas 304b, 304c, 304e, 304f of the transmitted ROI 300 are generally brighter than the other 5 pixels in the same ROI 300 and than all pixels of the reflected ROI 302 As such, the fluorescent particle 206b is located axially more towards the focal plane 140 imaged on transmitted ROI 300 and is shifted by about half the diffraction limit toward the right and top relative to the excitation focus.

The signal from the two ROIs 300, 302 can also be combined into a 3D data stack (2 pixels in z; x and y dimensions are determined by the size of the ROIs 300, 302). Data analysis is a generalization of standard FPALM methods to 3D. Instead of a Gaussian, an experimentally obtained 3D-PSF can be fit to each data set consisting of the pixels around each detected probe molecule. The x, y and z-coordinates of each molecule are determined from the best fit of the molecule image with the PSF.

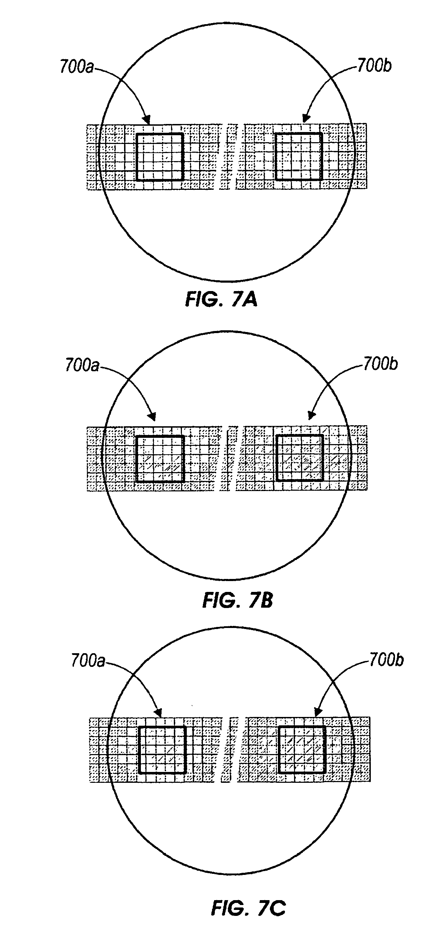

For BP FPALM, typically but not necessarily, larger ROIs 300, 302 are used to allow localization of particles over a larger field of view. Also, several particles can be present in the same ROI and still be analyzed separately. Slight variations in the magnification and rotation between the two detection areas may be corrected by software before combination of the two ROIs 300, 302 into a 3D data stack. The slight difference in the tilt of the focal planes between the two ROIs 300, 302 is negligible because of the large axial magnification (proportional to the lateral magnification squared). The analysis of the 3D data can be seen as the generalization of standard 2D FPALM analysis to 3D. Particles are identified in the z-projected images by iteratively searching for the brightest pixels and eliminating this region in the subsequent search until a lower intensity threshold has been reached. The raw data may be cut out in each ROI 300, 302 around each found particle in a square window of, for example, 10-19 pixels long and wide. Instead of a 2D Gaussian, a theoretical or experimentally obtained 3D-PSF can be fitted to the data sets in this cutout window using a simplex fitting algorithm adapted from Numerical Recipes in C, or a different algorithm. For example, the algorithm can be a localization algorithm that is independent of theoretical models and, therefore, is generally applicable to a large number of experimental realizations. A more detailed description of the localization algorithm is provided below, after the description of FIGs. 7A-7C.

From the resulting best fitting x, y and z-coordinates, the localized position is extracted and stored. Additionally, amplitude, background, the deviation from the cutout windows center, the number of iterations and the chi square value are stored, which allow later determination of the quality of the fit. The stored list of fit results is analyzed and translated into 3D data sets of customizable voxel sizes. The fit amplitude is used as the voxel intensity for every molecule found that fulfills the user-defined quality criteria. For operation without the piezo stage, the camera software (Solis, Andor Technology) is used for data recording. Software to operate the microscope with the piezo stage, for fitting, and to create 3D data sets, may be programmed in LabView 8.2 (National Instruments). Imspector (Andreas Schoenle, Max Planck Institute for Biophysical Chemisty, Goettingen, Germany) is used for display and analysis of 3D data sets. 3D rendered images may be created using Amira.

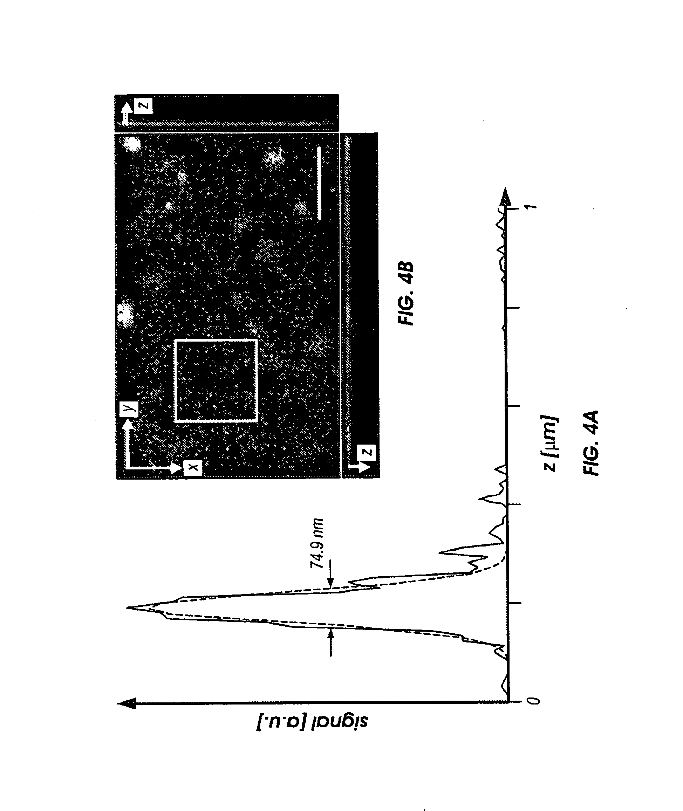

Referring to FIG. 4A, a graph illustrates the axial resolution measured using a BP FPALM setup. Specifically, the axial resolution is measured from an axial profile of caged fluorescein-labeled antibodies on a covers slip and embedded in 87% glycerol. The black line represents raw data and the dashed line represents a Gaussian fit.

From the axial profile, a full-width-at-half-maximum ("FWHM") distribution of 75 nanometers is measured, which is about 10-fold below the axial FWHM of measured PSF (which represents the axial resolution of conventional diffraction-limited microscopy). Since localization-based resolution is proportional to the diffraction-limited PSF size and the axial FWHM of a widefield 1.2NA PSF is ~250% larger than the lateral FWHM, the measured z-localization precision is consistent with x and y-resolution of 20 to 40 nanometers previously obtained in FPALM and PALM.

Referring to FIG. 4B, an inset shows added-up projections of the data set (of FIG. 4A) in three different orientations. The white box marks the region used to generate the axial profile. The scale bar of the original images was 2 micrometers.

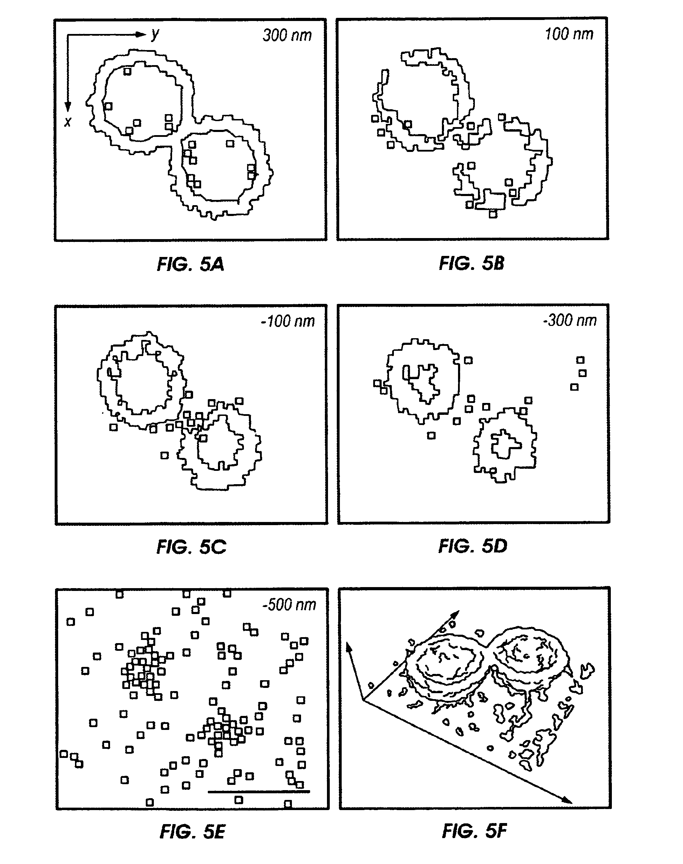

Referring to FIGs. 5A-5E, 3D BP FPALM imaging of 2 micrometers diameter beads labeled with caged fluorescein shows data sets at different axial positions. Specifically, representative 100 nanometer thick xy images of the resulting data set are illustrated at z =+300 nanometers, +100 nanometers, -100 nanometers, -300 nanometers, and -500 nanometers, respectively. The data shown in all planes 5A-5F is recorded simultaneously without scanning. Especially to image samples thicker than 1 micrometer, the sample stage can be moved after finishing recording at one sample position to access different sample depth positions and the data recording process is repeated until all sample positions of interest have been recorded.

Referring to FIG. 5F, a volume-rendered representation is shown based on the data sets of FIGs. 5A-5E. The curved surface of the bead is nicely reproduced over nearly 1 $\mu$m in depth without scanning. The optical images show well-below 100 nanometers resolution in all three dimensions. With approximately 30 x 30 x 80 nanometers[3], the resolvable volume is -500-fold below the diffraction-limited observation volume and represents the smallest observation volume achieved in a far-field light microscope.

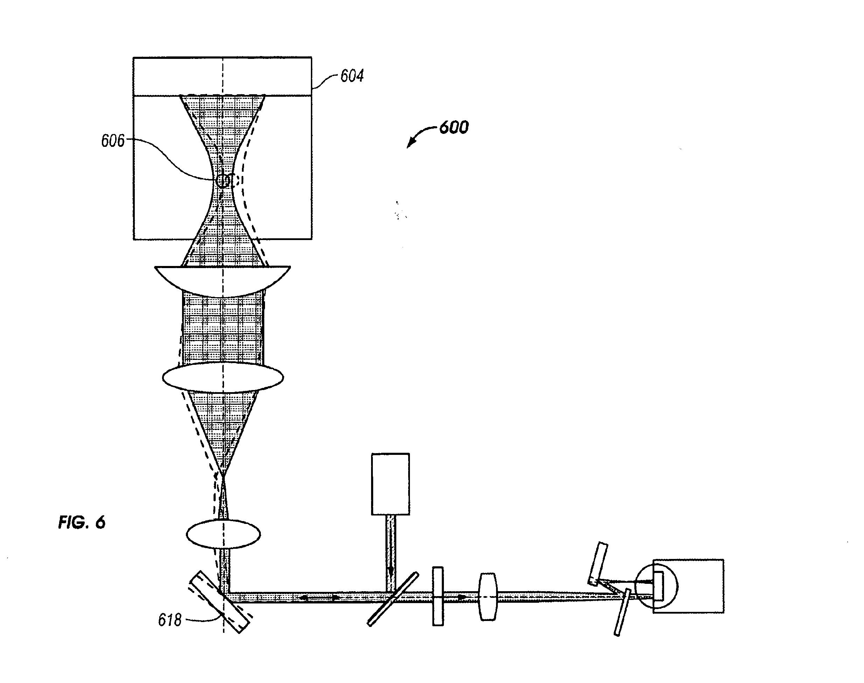

Referring to FIG. 6, a BP microscope system 600 is illustrated to show the tracking of a single particle 606 positioned on a sample stage 604. The BP microscope system 600 is generally similar to the BP microscope system 300 described above in reference to FIG. 3.

As the single particle 606 moves relatively to the sample stage 604 from a first position (indicated in solid line) to a second position (indicated in dashed line), the fluorescence light beam is adjusted by tilting one or more piezo-mounted mirrors or adjusting alternative beam-steering devices 618. In the exemplary scenario, the piezo-mounted mirror 618 is tilted counterclockwise from a first position (indicated in solid line) to a second position (indicated in dashed line). The rotation of the mirror 618 steers the fluorescence light beam on the camera as well as the excitation light beam focusing into the sample and coming from the laser to correct for sideways movement of the particle 606. The mirror 618 is rotated until the excitation light beam is again centered on the particle 606.

Optionally, the sample stage 604 is moved up or down to correct for vertical movement. Alternatively, a suitable beam-steering device 618 refocuses the beam vertically. After the necessary adjustments are made to track the particle 606, the positions of the piezo and stage are recorded to reconstruct large scale movement in post-processing.

Referring to FIGs. 7A and 7B, two insets show the images recorded when a particle moves from a first position to a second position as described above in reference to FIG. 6. In FIG. 7A, a transmitted ROI 700a and a reflected ROI 700b are recorded on a CCD chip when the particle is in the first position. The pixels of the transmitted ROI 700a show the same focus and intensity as the pixels in the reflected ROI 700b. A black box surrounds a general 5 x 5 pixel area of interest.

When the particle moves to the second position, as shown in FIG. 7B, the transmitted ROI 700a and the reflected ROI 700b change such that the respective pixels in the area of interest are now out of focus and of different intensity. For example, the pixels of the transmitted ROI 700a are now generally brighter (i.e., more intense) than in the first position, and off-center with respect to the area of interest (i.e., up and to the right). Similarly, the pixels of the reflected ROI 700b are now generally less bright (i.e., less intense) than in the first position, and off-center with respect to the area of interest (i.e., up and to the right).

Referring to FIG. 7C, the fluorescence light beam has now been steered to center it on the particle 606 in the second position. The pixels of the transmitted ROI 700a and of the reflected ROI 700b are generally similar, if not identical, to the pixels illustrated in the first position of the particle 606 (shown in FIG. 7A). Specifically, the pixels are generally centered within the area of interest and are now of similar intensity in both the transmitted ROI 700a and the reflected ROI 700b.

Various aspects of the present invention may be used alone, in combination, or in a variety of arrangements not specifically discussed in the embodiments described in the foregoing, and the aspects of the present invention described herein are not limited in their application to the details and arrangements of components set forth in the foregoing description or illustrated in the drawings. The aspects of the invention are capable of other embodiments and of being practiced or of being carried out in various ways.

## 3D Particle Localization Algorithm

Referring to the 3D particle localization algorithm, experimentally obtained 3D reference data sets are used to fit data sets obtained by either a multi-plane approach or an astigmatism approach. Practically, all raw data that contributes to the image of a particle is taken into account by the fitting process according to the particle's statistical weight, which is especially relevant for photon-limited applications such as imaging single molecules. Additional calibration steps are generally not necessary because the raw data and the fit reference data set are acquired by the same setup.

Based on performed experiments, the localization algorithm converges in close to 100% of the cases over a range of 1 to 2 $\mu$m by a fraction $\Phi$ of images in which the particle could be localized correctly. The fraction $\Phi$ of images depends on $\Delta$ and the number of detected photons, $N_{det}$. Only for axial particle positions far away from either of the focal detection planes the localization algorithm may fails to converge properly.

Differences generally arise in experiments directed to the Axial Localization Range: biplane detection is capable of localizing particles over a range nearly twice the value achievable by astigmatic detection. This is a relevant feature in imaging of thick biological samples and, therefore, the biplane mode seems to be a favorable mode for these applications. The fact that the signal in biplane detection is spread over double the number of pixels does not have a detectable negative effect in the experimental setup.

As mentioned above, the localization algorithm works independently of a theoretical model function and instead uses experimentally obtained reference data sets. This enables the algorithm to account for experimental deviations from perfect theoretical descriptions that are often difficult to include accurately in theoretical models and, also, reduces artifacts in the localization process. Additionally, complex theoretical models that cannot be described by a simple formula are now accessible by numerically generating a reference data set to feed into the algorithm. Small systematic deviations of the determined positions from actual positions can result from differences between used reference data sets and data generated during imaging, or from the fact that the reference data set data set is of finite size and can be readily corrected by proper calibration curves.

More relevantly, the localization algorithm allows general applicability to a range of 3D localization strategies without a need to develop individual theoretical model functions for every case. Additionally, it can be readily applied to recently reported detection schemes of iPALM and double-helix reference data sets. The iPALM detection scheme is described in more detail in an article titled "Interferometric fluorescent super-resolution microscopy resolves 3D cellular ultrastructure" by G. Shtengel, J. A. Galbraith, C. G. Galbraith, J. Lippincott-Schwartz, J. M. Gillete, S. Naley, R. Sougrat, C. M. Waterman, P. Kanchanawong, M. W. Davidson, R. D. Fetter, and H. F. Hess (Proc. Natl. Acad. Sci. USA 106, 3125-3130, 2009). The double-helix reference data sets detection scheme is described in more detail in an article titled "Three-dimensional, single-molecule fluorescence imaging beyond the diffraction limit by using a double-helix point spread function" by S. R. Pavani, M> A. Thompson, J. S. Biteen, S. J. Lord, N. Liu, R. J> Twieg, R. Piestun, and W. E. Moemer (Proc. Natl. Acad. Sci. USA 106, 2995-2999, 2009).

Furthermore, the localization algorithm is not limited to the five fitting parameters identified below (*i.e.*, x-position, *y*-position, *z*-position, amplitude, and background) or to 3D reference data sets. The localization algorithm can be readily expanded to include parameters such as interference phase, polarization, or wavelength by providing experimental reference data set sets that provide the necessary information in a fourth, fifth, or even higher dimension. Alternatively, less parameters and dimensions are possible, allowing for application to 2D imaging.

**Software**

Image acquisition software that controls camera and piezo actuator parameters may be written, for example, using LabVIEW 8.2 software in Windows XP, the software being available from National Instruments Corp., Austin, Texas. Recorded data is stored in a raw data format that is later analyzed by separate analysis software programmed in C, which may run on a Linux computer cluster (e.g., 31 compute nodes, each equipped with two dual-core AMD Opteron processors and 16 GB of RAM and connected by a single gigabit Ethernet network).

As a brief overview, ROIs corresponding to an illuminated field of view are cut out automatically. In biplane detection mode, the two ROIs in every frame representing the two detected planes are co-registered by slightly tilting and magnifying one ROI according to earlier determined calibration values. Particles are identified as the brightest pixels in smoothed versions of the ROIs. For every identified particle, one ROI of 15 $\times$ 15 pixels at 2 $\times$ 2 binning (corresponding to 1.9 $\mu$m $\times$ 1.9 $\mu$m in the sample) is cut out from the non-smoothed data centered on the identified brightest pixel in the astigmatic (biplane) detection mode. This data is, then, corrected for an electronic offset in the signal stemming from the camera, translated from counts into number of photons, and fed into the fit algorithm.

The fit algorithm provides the best estimates for the three spatial particle coordinates of the particle, as well as the amplitude and a background value of the particle. The coordinates, amplitude, and/or background value are stored together with other parameters that indicate quality of the fit (e.g., $\chi^2$-values, number of iterations before convergence, etc.) in ASCII data lists. These lists are later compiled into the data presented below using, for example, such computer programs like Microsoft Excel, Origin (OriginLab, Northampton, MA), and LabVIEW.

The same software, especially the same fit algorithm, may be applied to data from both imaging modes with the only difference being that in biplane mode two ROIs are used instead of one. Combined with the required minimal changes in the optical setup, this warrants optimal conditions for a direct and thorough comparison of the two methods of 3D localization.

**Fit Algorithm**

The fit algorithm, also referred to as a particle localization routine, performs for every identified particle a least-squares fit based on the Nelder-Mead downhill simplex method. This method is described in more detail in an article titled "Numerical Recipes: The Art of Scientific Computing" by W. H. Press, S. A. Teukolsky, W. T. Vetterling, and B. P. Flannery (Cambridge University Press, 2007). This algorithm, in short, finds the best fit by successively contracting an $n$-dimensional polytope ("simplex" with $m+1$ vertices) around the minimum of the figure-of-merit function in $m$-dimensional parameter space.

The figure-of-merit function, $\chi^2$, is calculated as squares of the error-weighted differences between the observed number of photons, $n_j$, and a model function, F, which depends on a set of fit parameter values summed over all pixels, $j$, which describe the image of an identified particle:

$$\chi^2(v,b,\mathbf{a}) = \sum_j \left( \frac{n_j - F_{v,b,\mathbf{a}}(\mathbf{x}_j)}{\sigma_j} \right)^2 \qquad (1)$$

The 3D positions, $\mathbf{x}_j$, describe the coordinates in the sample and correspond to a lattice of 15 $\times$ 15 $\times$ 2 or 15 $\times$ 15 $\times$ 1 extracted pixels in biplane and astigmatic detection mode, respectively. Alternatively, the 3D positions can represent any distribution matching the experimental imaging conditions. The estimated statistical error of $n_j$ - $\sigma_j$ - is assumed to be $n_j^{1/2}$ because shot noise is generally the main error contribution.

To fit the particle data, the model function $F_{v,b,a}(\mathbf{x}) = vh_a(\mathbf{x}) + b$ depends on m = 5 parameters. Specifically, the 5 parameters are (1-3) the particle's 3D position a = $(a_x, a_y, a_z)$, (4) the number of photons, v, at the intensity maximum detected over the area of one pixel, and (5) the number of background photons, b, per pixel. The normalized instrument response at point x for a particle located at position a is described by $h_a(\mathbf{x})$ and is derived from experimentally obtained reference data sets.

The reference data set $h_0(\xi_l)$ is defined for a lattice of voxel coordinates $\xi_l$. The required values $h_a(\mathbf{x}_j)$ have to be determined from the reference data set by interpolation, making use of the fact that for a translationally invariant system $h_a(\mathbf{x}) = h_0(\mathbf{x} - a)$. Simple linear interpolation and related methods generate points of non-differentiability that can cause failure of proper convergence of the simplex method and induce localization artifacts. To address this issue, the following interpolation method based on Fourier transforms has been developed.

The problem of estimating the value of a sampled function at a certain point of interest, x - a can be interpreted as determining the function value at the nearest node $\xi_l$ after shifting the whole function by the amount necessary to make (x - a) coincide with $\xi_l$. This shift can be achieved by convolving the function with a Dirac delta distribution:

$$h_a(\mathbf{x}_j) = h_0(\xi_l) \otimes \delta(\xi_l - \mathbf{D}_a(\mathbf{x}_j)) \qquad (2),$$

where $\mathbf{D}_a(\mathbf{x}_j) = \xi_l - (\mathbf{x}_j - a)$ describes the vector between the position $\mathbf{x}_j$ - a and its closest neighbor $\xi_l$. In Fourier space the convolution assumes the simple form of a multiplication,

$$FT\{h_a(\mathbf{x}_j)\} = H_0(\kappa_l) \times e^{-i\kappa_l \mathbf{D}_a(\mathbf{x}_j)} \qquad (3).$$

$H_0(\kappa_l)$ is the optical transfer function ("OTF") of the system and is calculated once at the beginning of the fit procedure as the Fourier transform of $h_0(\xi_l)$. Multiplication with the parameter-dependent phase factor $\exp(-i\kappa_l \mathbf{D}_a(\mathbf{x}_j))$ and inverse Fourier transform yield the shifted reference data set $h_a(\mathbf{x}_j)$.

It can be easily realized that the spacing of the pixel positions, $\mathbf{x}_j$, is an integer multiple of the spacing of the reference data set nodes $\xi_l$. In this case, $\mathbf{D}_a(\mathbf{x})$ is independent of $\mathbf{x}_j$ and a single inverse Fourier transformation of Eq. 3 is sufficient to find all the reference data set values required to calculate $\chi^2$ for a given shift a.

Because of small experimental differences between the two biplane detection reference data sets, we use a slight modification of the described method that performs the reference data set translation as described by Eq. 3 simultaneously for both reference data sets. Values $h_a(\mathbf{x}_j)$ are extracted from the appropriate OTFs according to the detection plane $\mathbf{x}_j$ in which the values $h_a(\mathbf{x}_j)$ are located. For calculating the discrete Fourier transforms, for example, the fit algorithm can use the freely available FFTW by M. Frigo and S. G. Johnson (http://www.fftw.org, 2008).

**Sample**

In the performed experiments, fluorescent latex beads of 100 nm diameter with an emission maximum at 560 nm (F-8800, Invitrogen, Carlsbad, California) were imaged. Beads were adhered on poly-L-lysine coated (Sigma-Aldrich, St. Louis, MO) cover slips, immersed in water and mounted on a slide. Bead density was chosen so low, that only about eight to twelve beads were visible in the field of view when imaging. This guaranteed that fluorescence from neighboring particles was not influencing the analysis.

**Generation of the Reference Data Set**

In the localization algorithm, an experimentally obtained reference data set (also referred to as a point-spread function) replaces theoretical models used elsewhere. To rule out localization artifacts caused by this reference data set, great care was exercised in its generation during performed experiments. The same bead samples as in later experiments were imaged at maximum electron-multiplying gain of the camera without pixel binning. Single frames were recorded with acquisition times of 30 ms at 50 nm axial piezo steps over a range of 10 $\mu$m.

Typically, during performed experiments, approximately 3,000 photons were detected from each bead at each $z$-position near the focal plane. Single beads were identified visually from the recorded data stacks, and ROIs of 3.8 $\mu$m $\times$ 3.8 $\mu$m size centered on the signal maximum were extracted. In the case of biplane detection, stacks were cut out for both recorded planes resulting in two correlated reference data sets. The extracted stacks were loaded into the data processing software Imspector (written by Dr. Andreas Schoenle, Max Planck Institute for Biophysical Chemistry, Goettingen, Germany, and available via Max-Planck-Innovation GmbH, Munich, Germany).

In Imspector, the background was removed and the data was corrected for bleaching that had occurred during the imaging process. The reference data sets were then cut to a size of approximately 3.8 $\mu$m $\times$ 3.8 $\mu$m $\times$ 7.5 $\mu$m with the reference data set centered in the middle. In biplane mode, both reference data sets were cut in an identical way such that (i) the stack centers were located axially in the middle between the two reference data set centers and (ii) the reference data set centers maintained their original axial distance. To reduce noise, the reference data sets were resampled to voxel sizes close to the resolution limit $(x = y = 127$ nm, $z = 200$ nm$)$.

The assured maximum processing speed in the fit algorithm, due to the inclusion of Fourier transformation steps, depends on the number of reference data set voxels without altering the optical characteristics of the original reference data set. The reference data set has been further normalized to a maximum value of 1 for easier determination of reasonable start parameters for the fit algorithm. In biplane mode, the brighter reference data set was normalized to 1 and the other reference data set was normalized to a lower value.

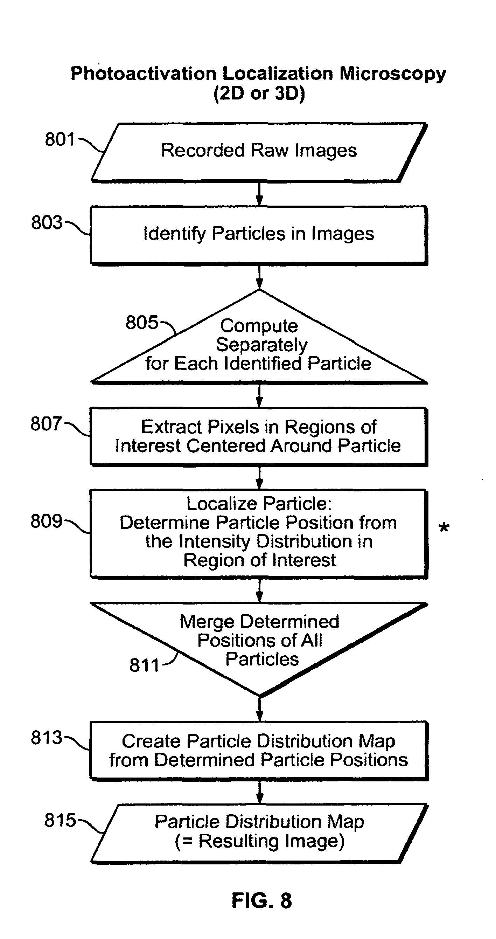

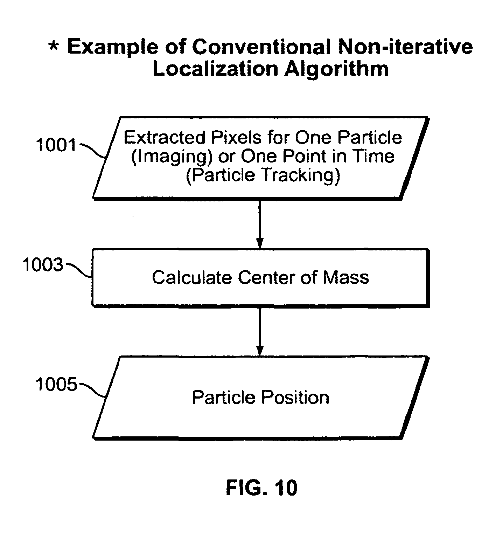

Referring to FIG. 8, an exemplary photoactivation localization microscopy method in accordance with the features described above includes providing recorded raw images (801) from which particles are identified in images (803). The photoactivation localization microscopy method can be performed in both 2D and 3D. A computation is made separately for each identified particle (805) and pixels are extracted in regions of interest centered around each of the identified particles (807). Each identified particle is localized by determining the particle position from the intensity distribution in the region of interest (809). Additional details regarding the localization of each identified particle is provided in FIGs. 10-12. The determined positions of all the particles are merged (811) and a particle distribution map is created from the determined particle positions (813). The particle distribution map is provided as a resulting image (815).

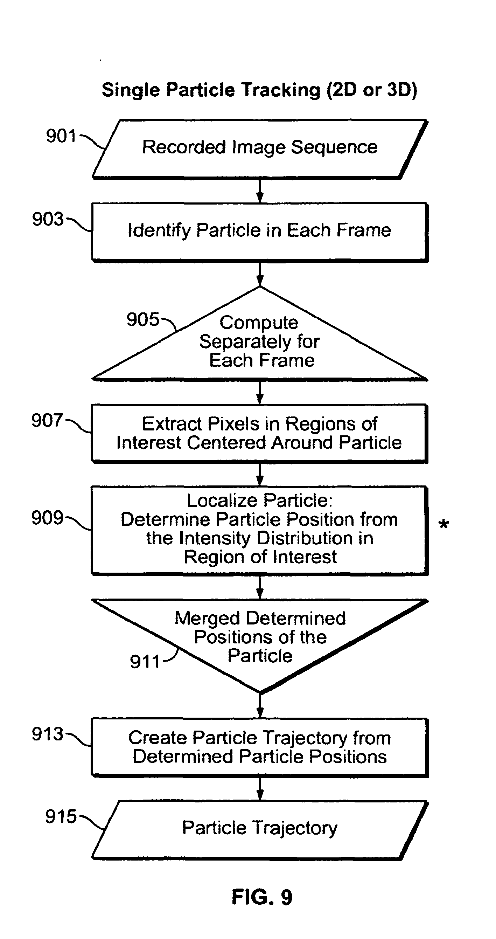

Referring to FIG. 9, an exemplary single particle tracking method in accordance with the features described above includes providing a recorded image sequence (901) from which a particle is identified in each frame (903). The single particle tracking method can be performed in both 2D and 3D. A computation is made separately for each frame (905) and pixels are extracted in regions of interest centered around the particle (907). The particle is localized by determining the particle position from the intensity distribution in the region of interest (909). Additional details regarding the localization of each identified particle is provided in FIGs. 10-12. The determined positions of the particle are merged (911) and a particle trajectory is created from the determined particle positions (913). The resulting particle trajectory is provided (915).

Referring to FIG. 10, an example of a conventional non-iterative localization algorithm includes extracting pixels for one particle (imaging) or one point in time (particle tracking) (1001), wherein the center of mass is calculated (1003). The particle position is, then, determined (1005).

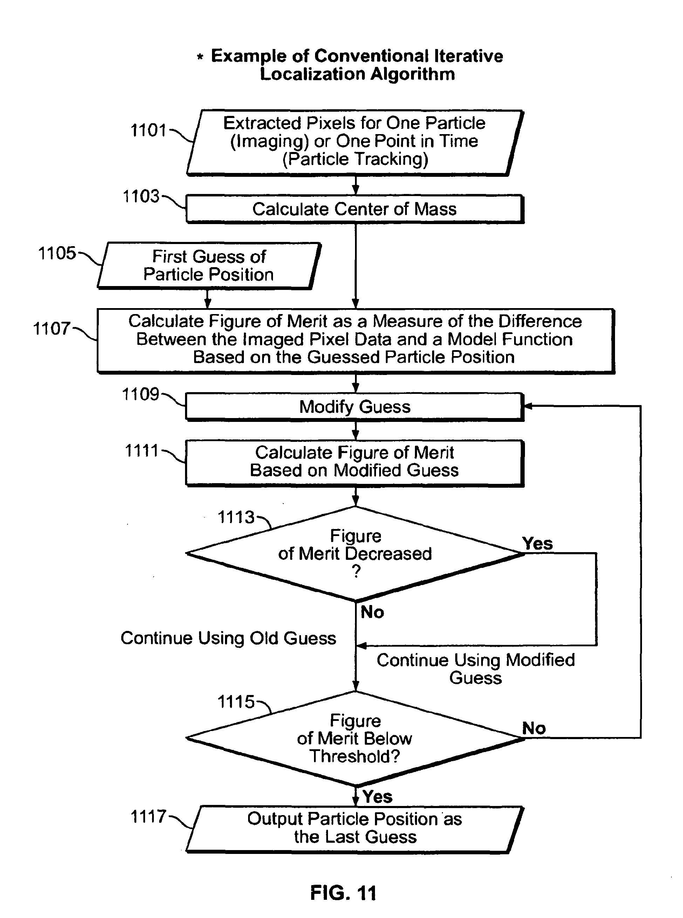

Referring to FIG. 11, an example of a conventional iterative localization algorithm includes extracting pixels for one particle (imaging) or one point in time (particle tracking) (1101). After calculating the center of mass (1103), a first guess of the particle position (1105) is provided to calculate the figure of merit as a measure of the difference between the imaged pixel data and a model function based on the guessed particle position (1107). The guess is modified (1109) and the figure of merit is calculated based on the modified guess (1111). If the figure of merit has not decreased (1113), the old guess is used to determine if the figure of merit is below a specific threshold (1115). If the figure of merit has decreased (1113), the modified guess is used to determine if the figure of merit is below the specific threshold (1115). Then, if the figure of merit is below the specific threshold, the particle position is outputted as the last guess (1117). However, if the figure of merit is not below the specific threshold, the guess is modified (1109) and the figure of merit is calculated based on the modified guess (1111).

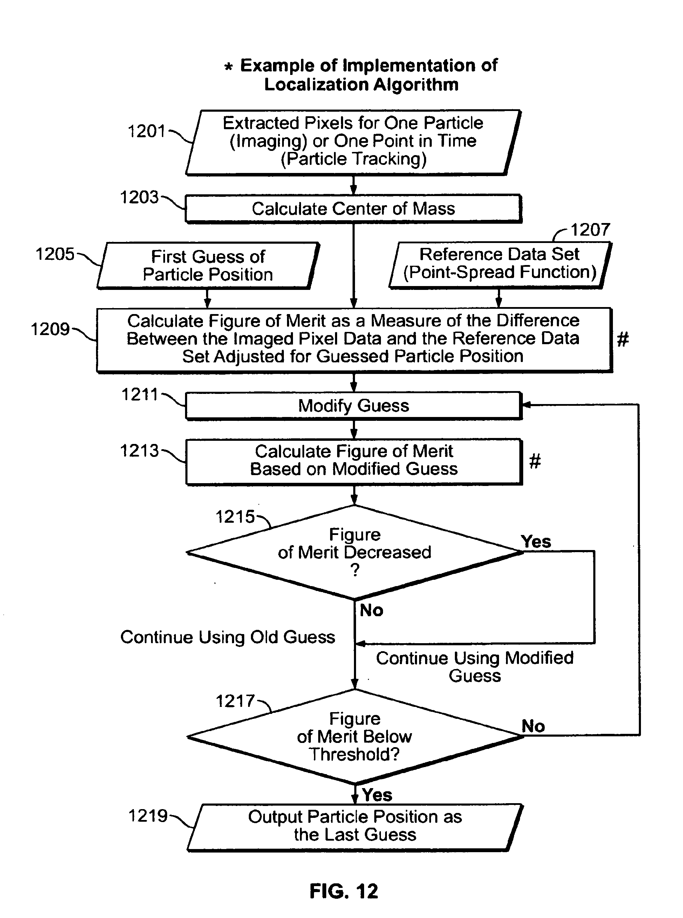

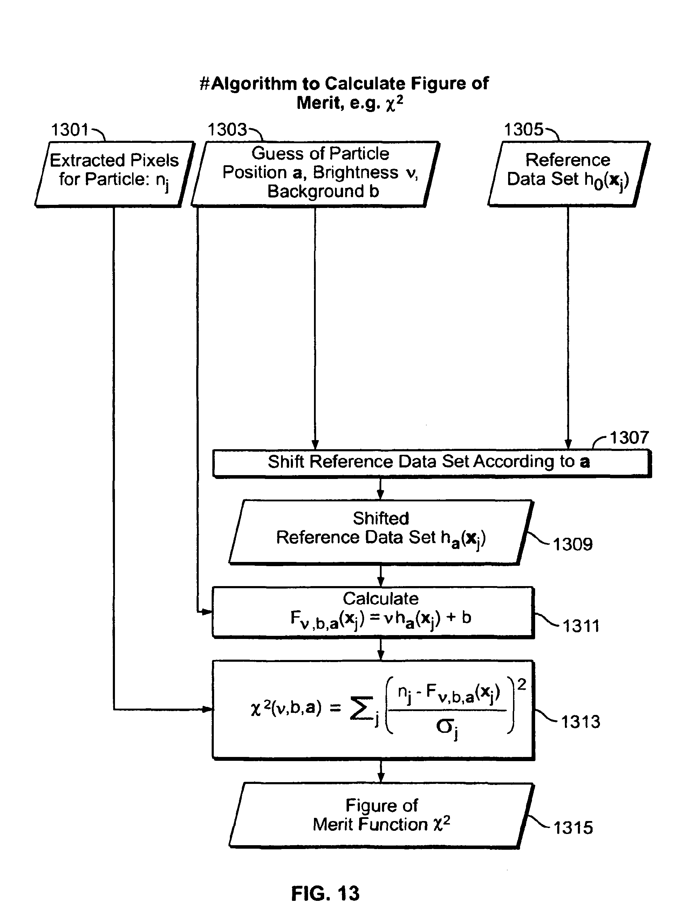

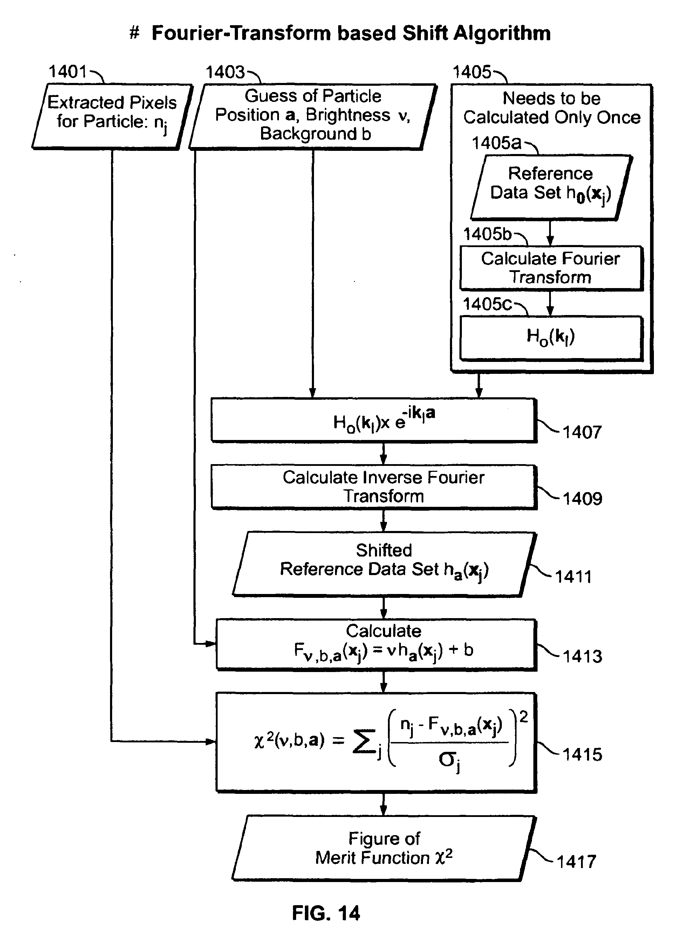

Referring to FIG. 12, in an exemplary implementation of the fit algorithm described above pixels are extracted for one particle (imaging) or one point in time (particle tracking) (1201). After calculating the center of mass (1203), a first guess of the particle position (1205) and a reference data set (1207) is provided to calculate the figure of merit as a measure of the difference between the imaged pixel data and the reference data set adjusted for guessed particle position (1209). Exemplary algorithms for calculating the figure of merit are further described below in reference to FIGs. 13 and 14.

The guess is modified (1211) and the figure of merit is calculated based on the modified guess (1213). If the figure of merit has not decreased (1215), the old guess is used to determine if the figure of merit is below a specific threshold (1217). If the figure of merit has decreased (1215), the modified guess is used to determine if the figure of merit is below the specific threshold (1217). Then, if the figure of merit is below the specific threshold, the particle position is outputted as the last guess (1219). However, if the figure of merit is not below the specific threshold, the guess is modified (1211) and the figure of merit is calculated based on the modified guess (1213).

Referring to FIG. 13, an algorithm for calculating the figure of merit includes extracting pixels for a particle (1301), guessing the particle position, brightness, and background (1303), and providing the reference data set (1305). The reference data set is shifted in accordance with the particle position (1307) and the shifted reference data set (1309) and the particle position, brightness, and background are provided for calculating the model function $F_{v,b,\mathbf{a}}(\mathbf{x}_j) = vh\mathbf{a}(\mathbf{x}_j) + b$ (1311). The figure of merit is calculated (1313) based on the model function and the extracted pixels for the particle and the figure of the merit function is provided (1315).

Referring to FIG. 14, an exemplary embodiment for a Fourier-transform based Shift Algorithm includes extracting pixels for a particle (1401), and guessing the particle position, brightness, and background (1403). A calculation (1405) is performed to obtain a reference data set (1405a), a Fourier Transform (1405b), and the OTF (1405c). The OTF is multiplied with a parameter-dependent phase factor (1407), based on the particle position, brightness, and background. The inverse Fourier Transform is calculated (1409), providing a shifted reference data set (1411). The model function $F_{v,b,\mathbf{a}}(\mathbf{x}_j) = vh\mathbf{a}(\mathbf{x}_j) + b$ is calculated (1413) based on the shifted reference data set and the particle position, brightness, and background. The figure of merit is calculated (1415) based on the model function and the extracted pixels for the particle and the figure of the merit function is provided (1417).

Each of these embodiments and obvious variations thereof is contemplated as falling within the scope of the claimed invention, which is set forth in the following claims.

**Claims**

1. A microscopy system (100) configured for creating 3D images from individually localized probe molecules, the system comprising:

an activation light source (104) configured to illuminate a sample with an activation light, the activation light source (104) being configured to activate probes of at least one probe subset of the plurality of photo-sensitive luminescent probes;
a readout light source (102) configured to illuminate the sample with a readout light, the readout light source (102) being configured to cause luminescence light from the activated probes;
a beam splitting device (134) located in a detection light path that splits the luminescence light into at least two paths, the beam splitting device (134) creating at least two detection planes that correspond to the same or different number of object planes of the sample;
at least one camera (126) positioned to detect simultaneously the at least two detection planes, the number of object planes being represented in the camera (126) by the same number of recorded regions of interest; and
a controller adapted to:

combine a signal from the regions of interest into a 3D data stack,
fit an experimentally or theoretically obtained 3D reference data set to the 3D data stack, comprising to:

calculate a figure of merit as a measure of the difference between the imaged pixel data and the 3D reference data set modifiable by at least one parameter, and

optimize the figure of merit by adjusting the at least one parameter in order to obtain the x,y and z-coordinate of the photo-sensitive luminescent probe.

2. The microscopy system of claim 1, wherein the controller is further programmable to perform a least-squares fit for finding a best fit by successively contracting an n-dimensional polytope around a minimum of a figure-of-merit function in m-dimensional parameter space.

3. The microscopy system of claim 1, wherein the controller is further programmable to calculate the figure-of-merit function as a square of error-weighted differences between observed number of photons and a model function that depends on a set of fit parameter values summed over all pixels.

4. The microscopy system of claim 1, wherein the figure-of-merit function $\chi^2$ is expressed as

$$\chi^2(v,b,\mathbf{a}) = \sum_j \left( \frac{n_j - F_{v,b,\mathbf{a}}(\mathbf{x}_j)}{\sigma_j} \right)^2 ,$$

wherein $\mathbf{x}_j$ describes 3D coordinates in the sample, $n_j$, is the observed number of photons, j is the number of all pixels, $F_{v,b,\mathbf{a}}(\mathbf{x}) = v h_\mathbf{a}(\mathbf{x}) + b$, a is the particle 3D position in a specific dimension, $v$ is the number of photons at the intensity maximum detected over the area of one pixel, $b$ is the number of background photons per pixel, and $h_\mathbf{a}(\mathbf{x})$ a describes the normalized instrument response at point $\times$ for a particle located at position a.

5. The microscopy system of claim 1, wherein fitting the 3D data stack is based on 5 parameters, including (i) particle 3D position in $\times$ direction $a_x$, (ii) particle 3D position in y direction $a_y$, (iii) particle 3D position in z direction $a_z$, (iv) number of photons $v$ at the intensity maximum detected over the area of one pixel, and (v) the number of background photons b per pixel.

6. The microscopy system of claim 1, wherein the 3D reference data set is defined for a lattice of voxel coordinates $\xi_l$, the controller being further programmable to determine values $h_\mathbf{a}(\mathbf{x}_j)$ from the 3D reference data set by interpolation.

7. The microscopy system of claim 6, wherein interpolation is based on Fourier transforms.

8. The microscopy system of claim 6, wherein the controller is further programmable to convolve the 3D reference data set with a shifted Dirac delta distribution.

9. The microscopy system of claim 1, wherein the at least one parameter includes a particle position, an amplitude, and a background signal.

10. The microscopy system of claim 1, wherein the at least one parameter includes an interference phase parameter, a polarization parameter, and a wavelength parameter.

**Patentansprüche**

1. Mikroskopiesystem (100), konfiguriert für das Erzeugen von 3D-Bildern aus individuell lokalisierten Sondenmolekülen, wobei das System umfasst:

eine Aktivierungslichtquelle (104), konfiguriert, um eine Probe mit einem Aktivierungslicht zu beleuchten, wobei die Aktivierungslichtquelle (104) konfiguriert ist, um Sonden wenigstens eines Sondenteilsatzes aus einer Vielzahl von lichtempfindlichen Lumineszenzsonden zu aktivieren,

eine Ausleselichtquelle (102), konfiguriert, um die Probe mit einem Ausleselicht zu beleuchten, wobei die Ausleselichtquelle (102) konfiguriert ist, um ein Lumineszenzlicht von den aktivierten Sonden zu veranlassen,

eine Strahlteilungseinrichtung (134), die in einem Erfassungslichtpfad angeordnet ist, der das Lumineszenzlicht in wenigstens zwei Pfade teilt, wobei die Strahlteilungseinrichtung (134) wenigstens zwei Erfassungsebenen erzeugt, die derselben oder einer anderen Anzahl von Objektebenen der Probe entsprechen,
wenigstens eine Kamera (126), die positioniert ist, um gleichzeitig die wenigstens zwei Erfassungsebenen zu erfassen, wobei die Anzahl von Objektebenen in der Kamera (126) durch dieselbe Anzahl von aufgezeichneten interessanten Bereichen repräsentiert wird,
und
eine Steuereinrichtung, ausgebildet zum:

Kombinieren eines Signals von den interessanten Bereichen zu einem 3D-Datenstapel,
Anpassen eines experimentell oder theoretisch erhaltenen 3D-Bezugsdatensatzes an den 3D-Datenstapel einschließlich von:

Berechnen einer Bewertung als eines Maßes für die Differenz zwischen den abgebildeten Bildpunktdaten und dem wenigstens einen Parameter modifizierbaren 3D-Bezugsdatensatz, und
Optimieren der Bewertung durch das Einstellen des wenigstens einen Parameters, um die x-, y- und z-Koordinate der lichtempfindlichen Lumineszenzsonde zu erhalten.

2. Mikroskopiesystem nach Anspruch 1, wobei die Steuereinrichtung weiterhin programmierbar ist, um eine Kleinste-Quadrate-Anpassung für das Finden einer besten Anpassung durch das sukzessive Kontrahieren eines n-dimensionalen Polytops um ein Minimum einer Bewertungsfunktion in einem m-dimensionalen Parameterraum durchzuführen.

3. Mikroskopiesystem nach Anspruch 1, wobei die Steuereinrichtung weiterhin programmierbar ist, um die Bewertungsfunktion als ein Quadrat von fehlergewichteten Differenzen zwischen einer beobachteten Anzahl von Photonen und einer Modellfunktion, die von einem Satz von über alle Bildpunkte summierten Anpassungsparameterwerten abhängt, zu berechnen.

4. Mikroskopiesystem nach Anspruch 1, wobei die Bewertungsfunktion $\chi^2$ wie folgt ausgedrückt wird:

$$\chi^2(v, b, a) = \sum_j \left( \frac{n_j - F_{v,b,a}(x_j)}{\sigma_j} \right)^2$$

wobei $x_j$ 3D-Koordinaten in der Probe beschreibt, $n_j$ die beobachtete Anzahl von Photonen ist, j die Anzahl aller Bildpunkte ist, $F_{v,b,a}(x) = v h_a(x) + b$ ist, a die Partikel-3D-Position in einer spezifischen Dimension ist, $v$ die Anzahl von Photonen bei dem über den Bereich eines Bildpunkts erfassten Intensitätsmaximum ist, b die Anzahl von Hintergrundphotonen pro Bildpunkt ist, und $h_a(x)$ die normalisierte Instrumentantwort an einem Punkt $\times$ für ein Partikel an der Position a ist.

5. Mikroskopiesystem nach Anspruch 1, wobei das Anpassen des 3D-Datenstapels auf fünf Parametern beruht, nämlich (i) der Partikel-3D-Position in der x-Richtung $a_x$, (ii) der Partikel-3D-Position in der y-Richtung ay, (iii) der Partikel-3D-Position in der z-Richtung $a_z$, (iv) der Anzahl von Photonen $v$ an dem über den Bereich eines Bildpunkts erfassten Intensitätsmaximum und (v) der Anzahl von Hintergrundphotonen b pro Bildpunkt.

6. Mikroskopiesystem nach Anspruch 1, wobei der 3D-Bezugsdatensatz für ein Gitter aus Voxelkoordinaten $\xi_l$ definiert ist, wobei die Steuereinrichtung weiterhin programmierbar ist, um Werte $h_a(x_j)$ aus dem 3D-Bezugsdatensatz mittels einer Interpolation zu bestimmen.

7. Mikroskopiesystem nach Anspruch 6, wobei die Interpolation auf Fourier-Transformationen beruht.

8. Mikroskopiesystem nach Anspruch 6, wobei die Steuereinrichtung weiterhin programmierbar ist, um den 3D-Bezugsdatensatz mit einer verschobenen Dirac-Deltaverteilung zu falten.

9. Mikroskopiesystem nach Anspruch 1, wobei der wenigstens eine Parameter eine Partikelposition, eine Amplitude und ein Hintergrundsignal enthält.

**10.** Mikroskopiesystem nach Anspruch 1, wobei der wenigstens eine Parameter einen Interferenzphasenparameter, einen Polarisierungsparameter und einen Wellenlängenparameter enthält.

**Revendications**

**1.** Système de microscopie (100) configuré pour créer des images en 3D à partir de sondes moléculaires localisées de manière individuelle, le système comprenant :

une source lumineuse d'activation (104) configurée pour illuminer un échantillon avec une lumière d'activation, la source lumineuse d'activation (104) étant configurée pour activer des sondes d'au moins un sous-ensemble de sondes de la pluralité de sondes luminescentes photosensibles ;
une source lumineuse de lecture (102) configurée pour illuminer l'échantillon avec une lumière de lecture, la source lumineuse de lecture (102) étant configurée pour provoquer une lumière de luminescence à partir des sondes activées ;
un dispositif de dédoublement de faisceau (134) situé dans un trajet de lumière de détection qui divise la lumière de luminescence en au moins deux trajets, le dispositif de dédoublement de faisceau (134) créant au moins deux plans de détection qui correspondent au même nombre ou à un nombre différent de plans d'objet de l'échantillon ;
au moins un appareil photographique (126) positionnée pour détecter simultanément les au moins deux plans de détection, le nombre de plans d'objet étant représenté dans l'appareil photographique (126) par le même nombre de régions d'intérêt enregistrées ;
et
une unité de commande adaptée pour :

combiner un signal en provenance des régions d'intérêt en une pile de données 3D,
ajuster un ensemble de données de référence 3D obtenues de manière expérimentale ou théorique à la pile de données 3D, comprenant les étapes consistant à :

calculer un facteur de mérite en tant que mesure de la différence entre les données de pixel représentées et l'ensemble de données de référence 3D pouvant être modifié par au moins un paramètre, et
optimiser le facteur de mérite par un ajustement du au moins un paramètre de manière à obtenir les coordonnées x, y et z de la sonde luminescente photosensible.

**2.** Système de microscopie selon la revendication 1, dans lequel l'unité de commande peut en outre être programmée pour réaliser un ajustement par les moindres carrés afin de trouver un meilleur ajustement en faisant converger de manière successive un polytope à n-dimensions autour d'un minimum d'une fonction facteur de mérite dans un espace de paramètres à m-dimensions.

**3.** Système de microscopie selon la revendication 1, dans lequel l'unité de commande peut en outre être programmée pour calculer la fonction facteur de mérite en tant que carré des différences pondérées par les erreurs entre le nombre observé de photons et une fonction modèle qui dépend d'un ensemble de valeurs de paramètres ajustées calculées pour tous les pixels.

**4.** Système de microscopie selon la revendication 1, dans lequel la fonction facteur de mérite $X^2$ est exprimée sous la forme

$$\chi^2(v,b,a) = \sum_j \left(\frac{n_j - F_{v.b.a}(x_j)}{\sigma_j}\right)^2,$$

où $\mathbf{x}_j$ décrit des coordonnées 3D dans l'échantillon, $n_j$ est le nombre observé de photons, j est le nombre de l'ensemble des pixels, $F_{v,b,a}(\mathbf{x}) = vh_a(\mathbf{x}) + b$, $a$ est la position 3D de particule dans une dimension spécifique, $v$ est le nombre de photons au niveau du maximum d'intensité détecté sur la surface d'un pixel, b est le nombre de photons de fond par pixel, et $h_a(\mathbf{x})a$ décrit la réponse d'instrument normalisée au niveau d'un point x pour une particule située au niveau d'une position *a*.

5. Système de microscopie selon la revendication 1, dans lequel un ajustement de la pile de données 3D est basé sur 5 paramètres, comprenant (i) une position 3D de particule dans une direction $a_x$ sur l'axe des x, (ii) une position 3D de particule dans une direction ay sur l'axe des y, (iii) une position 3D de particule dans une direction $a_z$ sur l'axe des z, (iv) un nombre de photons *v* au niveau du maximum d'intensité détecté sur la surface d'un pixel, et (v) le nombre de photons b de fond par pixel.

6. Système de microscopie selon la revendication 1, dans lequel l'ensemble de données de référence 3D est défini pour un réseau de coordonnées de voxel $\xi_j$, l'unité de commande pouvant en outre être programmée pour déterminer des valeurs $h_a(\mathbf{x}_j)$ à partir de l'ensemble de données de référence 3D par interpolation.

7. Système de microscopie selon la revendication 6, dans lequel une interpolation est basée sur des transformées de Fourier.

8. Système de microscopie selon la revendication 6, dans lequel l'unité de commande peut en outre être programmée pour convoluer l'ensemble des données de référence 3D avec une distribution delta de Dirac décalée.

9. Système de microscopie selon la revendication 1, dans lequel le au moins un paramètre comprend une position de particule, une amplitude, et un signal de fond.

10. Système de microscopie selon la revendication 1, dans lequel le au moins un paramètre comprend un paramètre de phase d'interférence, un paramètre de polarisation, et un paramètre de longueur d'onde.

**FIG. 1**

EP 2 265 932 B1

**FIG. 2**

**FIG. 3**

FIG. 4B

FIG. 4A

EP 2 265 932 B1

FIG. 5A

FIG. 5B

FIG. 5C

FIG. 5D

FIG. 5E

FIG. 5F

*FIG. 6*

EP 2 265 932 B1

FIG. 7A

FIG. 7B

FIG. 7C

24

## Photoactivation Localization Microscopy
## (2D or 3D)

801 — Recorded Raw Images

803 — Identify Particles in Images

805 — Compute Separately for Each Identified Particle

807 — Extract Pixels in Regions of Interest Centered Around Particle

809 — Localize Particle: Determine Particle Position from the Intensity Distribution in Region of Interest    *

811 — Merge Determined Positions of All Particles

813 — Create Particle Distribution Map from Determined Particle Positions

815 — Particle Distribution Map (= Resulting Image)

## FIG. 8

## Single Particle Tracking (2D or 3D)

901 — Recorded Image Sequence

903 — Identify Particle in Each Frame

905 — Compute Separately for Each Frame

907 — Extract Pixels in Regions of Interest Centered Around Particle

909 — Localize Particle: Determine Particle Position from the Intensity Distribution in Region of Interest *

911 — Merged Determined Positions of the Particle

913 — Create Particle Trajectory from Determined Particle Positions

915 — Particle Trajectory

**FIG. 9**

## ⋆ Example of Conventional Non-iterative Localization Algorithm

1001 — Extracted Pixels for One Particle (Imaging) or One Point in Time (Particle Tracking)

1003 — Calculate Center of Mass

1005 — Particle Position

**FIG. 10**

## \* Example of Conventional Iterative Localization Algorithm

1101 — Extracted Pixels for One Particle (Imaging) or One Point in Time (Particle Tracking)

1103 — Calculate Center of Mass

1105 — First Guess of Particle Position

1107 — Calculate Figure of Merit as a Measure of the Difference Between the Imaged Pixel Data and a Model Function Based on the Guessed Particle Position

1109 — Modify Guess

1111 — Calculate Figure of Merit Based on Modified Guess

1113 — Figure of Merit Decreased ?

Yes

No

Continue Using Old Guess

Continue Using Modified Guess

1115 — Figure of Merit Below Threshold?

No

Yes

1117 — Output Particle Position as the Last Guess

## FIG. 11

## * Example of Implementation of
## Localization Algorithm

1201 — Extracted Pixels for One Particle (Imaging) or One Point in Time (Particle Tracking)

1203 — Calculate Center of Mass

1205 — First Guess of Particle Position

1207 — Reference Data Set (Point-Spread Function)

1209 — Calculate Figure of Merit as a Measure of the Difference Between the Imaged Pixel Data and the Reference Data Set Adjusted for Guessed Particle Position   #

1211 — Modify Guess

1213 — Calculate Figure of Merit Based on Modified Guess   #

1215 — Figure of Merit Decreased ?

Yes

No

Continue Using Old Guess

Continue Using Modified Guess

1217 — Figure of Merit Below Threshold?

No

Yes

1219 — Output Particle Position as the Last Guess

**FIG. 12**

# #Algorithm to Calculate Figure of Merit, e.g. $\chi^2$

1301

Extracted Pixels for Particle: $n_j$

1303

Guess of Particle Position **a**, Brightness v, Background b

1305

Reference Data Set $h_0(x_j)$

1307

Shift Reference Data Set According to **a**

Shifted Reference Data Set $h_a(x_j)$ — 1309

Calculate $F_{v,b,a}(x_j) = v h_a(x_j) + b$ — 1311

$$\chi^2(v,b,a) = \sum_j \left( \frac{n_j - F_{v,b,a}(x_j)}{\sigma_j} \right)^2$$ — 1313

Figure of Merit Function $\chi^2$ — 1315

## FIG. 13

# # Fourier-Transform based Shift Algorithm

1401
Extracted Pixels
for Particle: $n_j$

1403
Guess of Particle
Position **a**, Brightness v,
Background b

1405
Needs to be
Calculated Only Once

1405a
Reference
Data Set $h_0(x_j)$

1405b
Calculate Fourier
Transform

1405c
$H_0(k_l)$

$H_0(k_l) \times e^{-ik_l a}$ — 1407

Calculate Inverse Fourier
Transform — 1409

Shifted
Reference Data Set $h_a(x_j)$ — 1411

Calculate
$F_{v,b,a}(x_j) = v h_a(x_j) + b$ — 1413

$$\chi^2(v,b,a) = \sum_j \left( \frac{n_j - F_{v,b,a}(x_j)}{\sigma_j} \right)^2$$ — 1415

Figure of
Merit Function $\chi^2$ — 1417

**FIG. 14**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **STEFAN W. HELL.** Far-Field Optical Nanoscopy. *Science,* 25 May 2007, vol. 316, 1153-1158
- **SAMUEL T. HESS et al.** UltraHigh Resolution Imaging by Fluorescence Photoactivation Localization Microscopy. *Biophysical Journal,* December 2006, vol. 91, 4258-4272
- **ERIC BETZIG et al.** Imaging Intracellular Fluorescent Proteins at Nanometer Resolution. *Science,* 15 September 2006, vol. 313, 1642-1645
- **MICHAEL J. RUST et al.** Sub-Diffraction-Limit Imaging by Stochastic Optical Reconstruction Microscopy. *Nature Methods / Advance Online Publication,* 09 August 2006
- **H. BOCK et al.** Resolution of $\lambda$/10 in Fluorescence Microscopy Using Fast Single Molecule Photo-Switching. *Applied Physics A,* 01 June 2007, vol. 88, 223-226
- **J. FOLLING et al.** Photochromic Rhodamines Provide Nanoscopy With Optical Sectioning. *Angew. Chem. Int. Ed.,* 2007, vol. 46, 6266-6270
- **AHMET YILDIZ et al.** Myosin V Walks Hand-Over-Hand: Single Fluorophore Imaging With 1.5-nanometers Localization. *Science,* 27 June 2003, vol. 300, 2061-2065
- **GERALD DONNERT et al.** Two-Color Far-Field Fluorescence Nanoscopy. *Biophysical Journal,* 06 February 2007, L67-L69
- **M. BATES ; B. HUANG ; G.T. DEMPSEY ; X. ZHUANG.** *Science,* 2007, vol. 317, 1749-1753
- **SAMUEL T. HESS et al.** Dynamic Clustered Distribution of Hemagglutinin Resolved at 40 nanometers in Living Cell Membranes Discriminates Between Raft Theories. *Proc. Natl. Acad. Sci. USA,* 30 October 2007, vol. 104, 17370-17375

- **JOERG BEWERSDORF et al.** H2AX Chromatin Structures and Their Response to DNA Damage Revealed by 4Pi Microscopy. *Proc. Natl. Acad. Sci. USA,* 28 November 2006, vol. 103, 18137-18142
- **K. I. WILLIG ; B. HARKE ; R. MEDDA ; S. W. HELL.** *Nat. Methods,* 2007, vol. 4, 915-918
- **HUANG et al.** *Science,* 2008
- **V. LEVI ; Q. RUAN ; E. GRATTON.** 3-D Particle Tracking In A Two-Photon Microscope: Application To The Study Of Molecular Dynamics IN Cells. *Biophys. J.,* 2005, vol. 88 (4), 2919-28
- **E TOPRAK et al.** Three-Dimensional Particle Tracking Via Bifocal Imaging. *Nano Lett.,* 2007, vol. 7 (7), 2043-45
- **G. SHTENGEL ; J. A. GALBRAITH ; C. G. GALBRAITH ; J. LIPPINCOTT-SCHWARTZ ; J. M. GILLETE ; S. NALEY ; R. SOUGRAT ; C. M. WATERMAN ; P. KANCHANAWONG ; M. W. DAVIDSON.** Interferometric fluorescent super-resolution microscopy resolves 3D cellular ultrastructure. *Proc. Natl. Acad. Sci. USA,* 2009, vol. 106, 3125-3130
- **S. R. PAVANI ; M> A. THOMPSON ; J. S. BITEEN ; S. J. LORD ; N. LIU ; R. J> TWIEG ; R. PIESTUN ; W. E. MOEMER.** Three-dimensional, single-molecule fluorescence imaging beyond the diffraction limit by using a double-helix point spread function. *Proc. Natl. Acad. Sci. USA,* 2009, vol. 106, 2995-2999
- Numerical Recipes: The Art of Scientific Computing. **W. H. PRESS ; S. A. TEUKOLSKY ; W. T. VETTERLING ; B. P. FLANNERY.** Numerical Recipes: The Art of Scientific Computing. Cambridge University Press, 2007